# EUROPEAN PATENT SPECIFICATION

(11) **EP 1 647 459 B1**
(45) Date of publication and mention of the grant of the patent: **05.08.2009**
(21) Application number: 04105114.5
(22) Date of filing: 18.10.2004
(51) Int. Cl.: B60S 1/34

(54) **A windscreen wiper arm**
Ein Wischerarm
Un bras d'essuie-glace

(43) Date of publication of application: 19.04.2006
(73) Proprietor: Federal-Mogul S.A., 6790 Aubange (BE)
(72) Inventor: Boland, Xavier, 6700, ARLON (BE)
(74) Representative: Hooiveld, Arjen Jan Winfried

(56) References cited:
- EP-A1- 0 579 550
- EP-A1- 1 125 806
- DE-A1- 19 802 451
- FR-A1- 2 848 954
- US-A- 4 856 137
- US-A1- 2002 112 307
- US-A1- 2002 157 204
- US-B1- 6 505 377
- PATENT ABSTRACTS OF JAPAN vol. 2002, no. 02, 2 April 2002 (2002-04-02) & JP 2001 301580 A (MITSUBA CORP), 31 October 2001 (2001-10-31)

## Description

The present invention relates to a windscreen wiper arm, particularly for automobiles, comprising a mounting head on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin, and wherein a spring is hooked with its first end on a pin on the mounting head.

Such a windscreen wiper arm is known from German patent publication no. 34 33 106 (SWF Auto-Electric GmbH). The arm member described therein is connected to a wiper rod, wherein one end of the wiper rod extends inside the U-shaped cross-section of the arm member. The side walls of the arm member are locally folded around the wiper rod, while a holder is folded around said end of the rod. The spring of this prior art windscreen wiper arm is hooked with its first end on the pin on the mounting head and with its second end on two eyes of the holder.

A disadvantage of the windscreen wiper arm known from the above German patent publication is that that windscreen wiper arm consists of many constructional parts (such as a wiper rod, a holder and a mounting head pin) for accommodating the spring, while complex machinery and tools are needed in manufacturing and mounting said parts, with all expenses involved.

A windscreen wiper arm according to the preamble of claim 1 is known from French patent publication no. 2,848,954 (Robert Bosch GmbH). A disadvantage thereof is that complex machinery and additional tools are needed to provide a leg of said U-shaped cross-section over a portion of its length with an extension, while said extension further requires the use of additional raw material.

It is an object of the invention to obviate this disadvantage, in the sense that at minimum costs - without using complex machinery and additional tools - a simple windscreen wiper arm with less constructional parts for mounting the spring is proposed. It is noted that the present invention is not restricted to cars, but also refers to rail coaches and other (fast) vehicles.

Thereto, according to the invention a windshield wiper arm mentioned in the preamble is characterized in that said spring is hooked with its second end on a lip cut in a base or a side wall which form the U-shaped cross-section of the arm member, wherein said lip is bend inwardly away from said base or side wall. In other words, by connecting the spring directly to the arm member less raw material is used, while additional tooling steps are avoided.

Particularly, said spring is hooked with its second end into a hole provided in said lip. Said hole is particularly stamped in the material of the arm member before the lip is cut from that material.

In a preferred embodiment of a windscreen wiper arm in accordance with the invention the arm member is made of a plastic material. Preferably, also the mounting head is made of a plastic material.

The invention also relates to a windscreen wiper device comprising an windshield wiper arm in accordance with the invention. Particularly, said windshield wiper device comprises an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for the windscreen wiper arm according to the invention. Such a windscreen wiper device is thus designed as a "yokeless" wiper device, wherein use is no longer made of several yokes pivotally connected to each other, but wherein the wiper device is biased by the carrier element, as a result of which is exhibits a specific curvature. The present windscreen wiper arm may comprise a pivot pin on one side thereof, which is inserted sideways into a through hole of the connecting device. It is noted that the present invention is not restricted to such a "yokeless blade", although being advantageous therein, but also extends to other types of windscreen wiper devices, such as the ones with yokes as referred to above.

Finally, the invention is also directed to a method for manufacturing a windscreen wiper arm, particularly for automobiles, comprising a comprising a mounting head on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin, and wherein a spring is hooked with its first end on a pin on the mounting head, characterized in that a lip is cut in a base and/or at least one side wall of the U-shaped cross-section of the arm member, wherein said lip is subsequently bend inwardly away from said base/side wall and wherein said spring is finally hooked with its second end into a hole provided in said lip.

The invention will now be explained in more detail with reference to figures illustrated in a drawing, wherein:
- Figures 1 and 2 are perspective, schematic views of a prior art windshield wiper device of the "yokeless" type, wherein the windscreen wiper arm is in a wiping position (figure 1) and in a mounting position (figure 2), respectively;
- Figure 3 shows a detail of the windscreen wiper device of figures 1 and 2;
- Figure 4 is a bottom view of the windscreen wiper arm of figures 1 and 2; and
- Figures 5 and 6 are a bottom view and a top view, respectively, of a windscreen wiper arm according to the invention to be used in a windscreen wiper device of the type of figures 1 and 2.

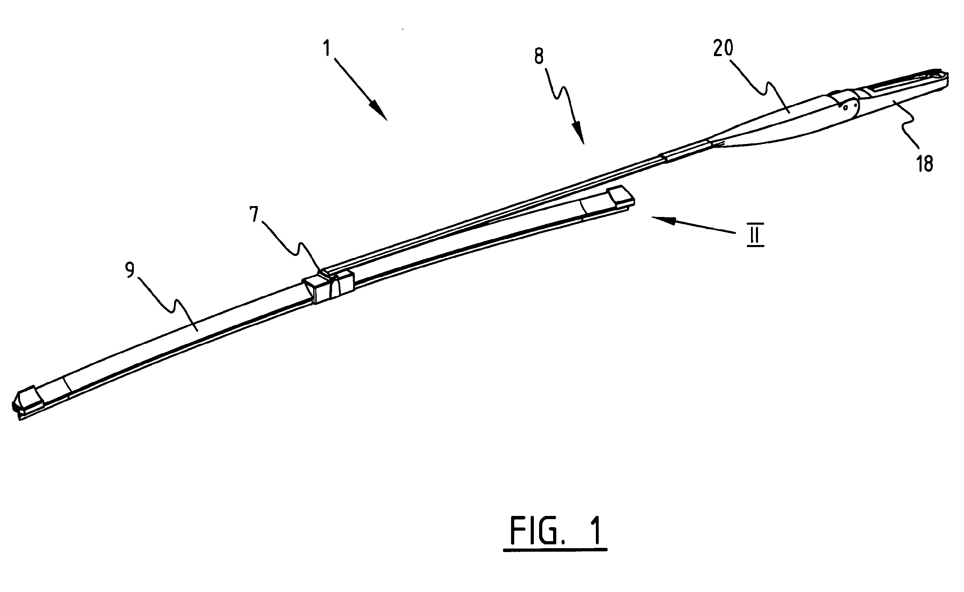

Figure 1 through 4 show a windscreen wiper device 1 according to the prior art. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

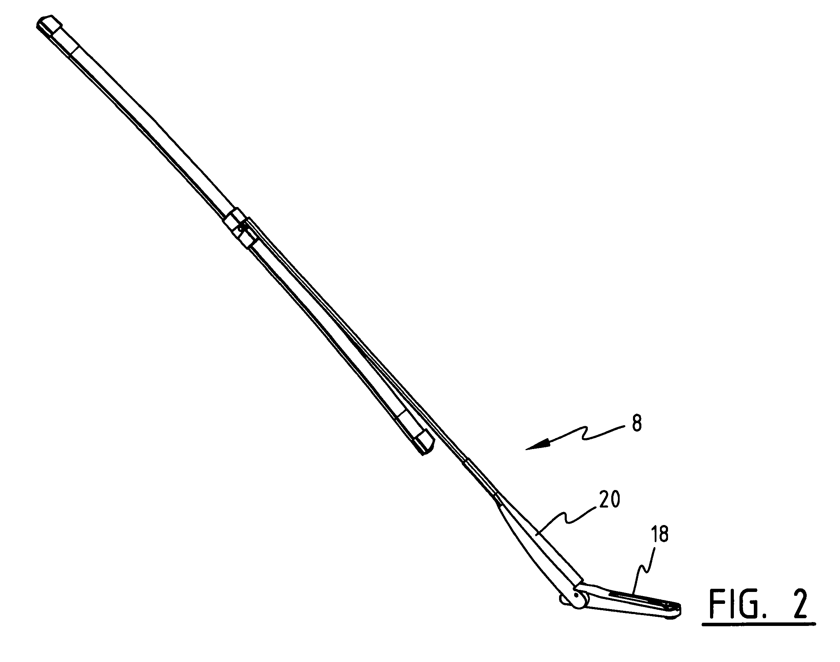

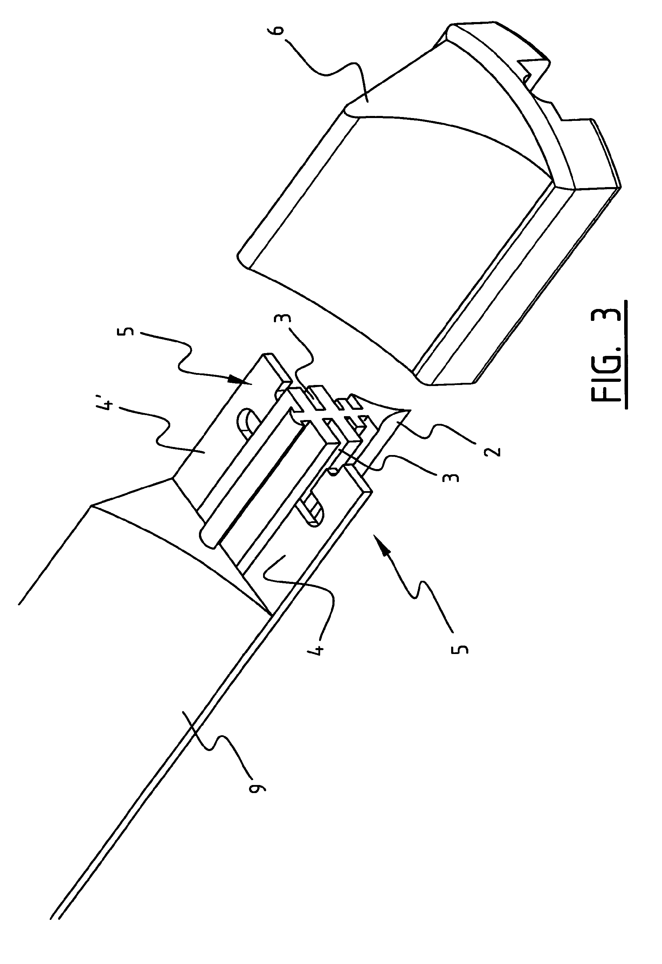

Figures 1 and 2 show the windscreen wiper device 1 in a wiping position and in a mounting position respectively, whereas figure 3 shows a free end of the windscreen wiper device 1 of figure 1.

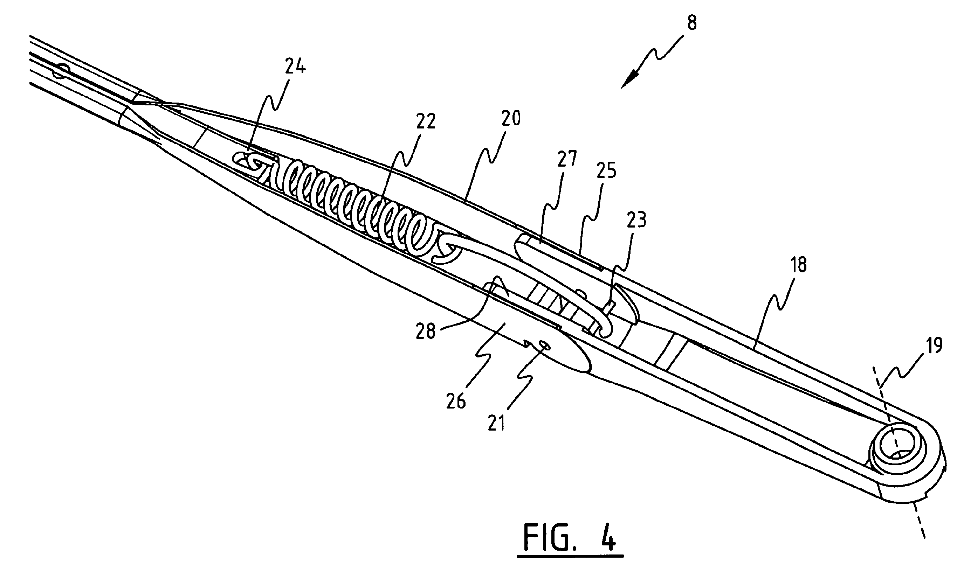

As illustrated in figure 4 the windscreen wiper arm 8 according to the prior art comprises a plastic mounting head 18 which can be fixed for rotation to a shaft 19 driven, via a mechanism not illustrated, by a small motor. Said windscreen wiper arm 8 further comprises a plastic arm member 20 supported by the mounting head 18, wherein said arm member 20 in turn supports the wiperblade 2 with the help of the connecting device 7, as illustrated in figure 1. The arm member 20 is pivotally connected to the mounting head 18 by means of a pivot pin 21. A spring 22 is hooked with its first end on a pin 23 on the mounting head 18 and with its second end on to a wiper rod 24 of the arm 8 in order to ensure that the arm member 20 and thus the wiper blade 2 connected thereto is pressed onto a windscreen to be wiped. In use, the shaft 19 rotates alternately in a clockwise and in a counter-clockwise sense carrying the mounting head 18 into rotation also, which in turn draws the arm member 20 into rotation and by means of the connecting device 7 moves the wiper blade 2.

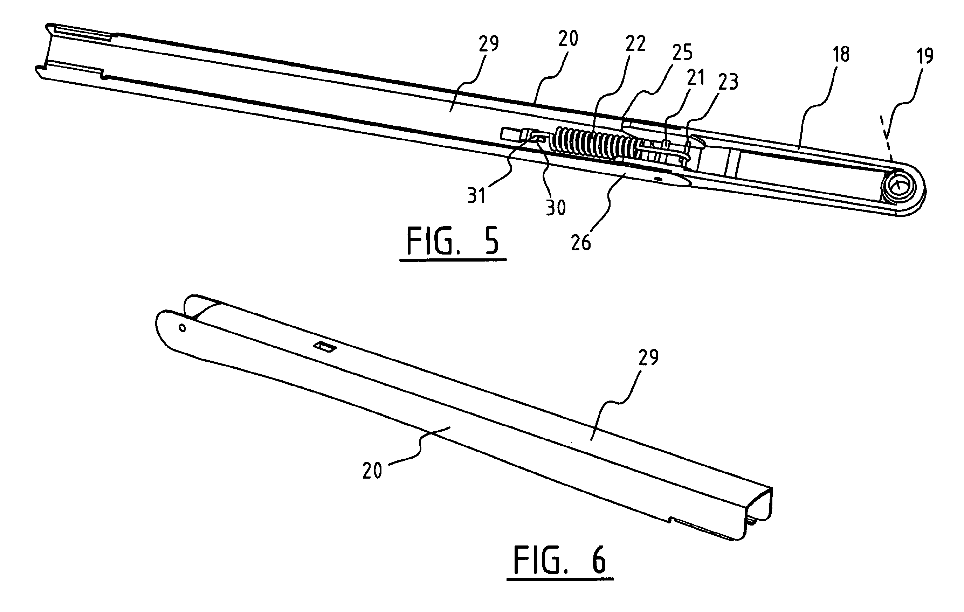

With reference to figures 5 and 6 according to the invention a spring 22 is accommodated in a metallic arm member 20, wherein said spring 22 is hooked with its first end on a pin 21 of a mounting head 18 of the type shown in figures 1, 2 and 4, and wherein said spring 22 is hooked with its second end on a base 29 of the U-shaped cross-section of the arm member 20. Particularly, said spring 22 is hooked with its second end on a lip 30 of said base 29. Said lip 30 is bend inwardly, i.e. away from said base 29. More in particular, said spring 22 is hooked with its second end into a hole 31 provided in said lip 30. Parts in figures 5 and 6 that correspond to those of figure 4 are designated with the same reference numerals.

The invention is not restricted to the embodiment shown, but also extends to other embodiments falling within the scope of the appended claims.

## Claims

1. A windscreen wiper arm. (8), particularly for automobiles, comprising a mounting head (18) on a drive shaft (19) and an arm member (20) pivotally connected to the mounting head (18) by means of a pivot pin (21), wherein the arm member (8) has a substantially U-shaped cross-section near said pivot pin (21) comprising two side walls (25, 26), wherein a part of the mounting head (18) extends between the side walls (25, 26) and beyond said pivot pin (21), and wherein a spring (22) is hooked with its first end on a pin (23) on the mounting head (18) and with its second end on the arm member (20), **characterized in that** said spring (22) is hooked with its second end on a lip (30) cut in a base (29) or a side wall (25, 26) which form the U-shaped cross-section of the arm member (20), wherein said lip (30) is bent inwardly away from said base (29) or side wall (25, 26).

2. A windscreen wiper arm (8) according to claim 1, wherein said spring (22) is hooked with its second end into a hole (31) provided in said lip (30).

3. A windscreen wiper arm (8) according to claim 1 or 2, wherein the arm member (20) is made of a plastic material.

4. A windscreen wiper device (1) comprising a windshield wiper arm (8) according to claim 1, 2 or 3.

5. A windshield wiper device (1) according to claim 4, wherein it comprises an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for the windscreen wiper arm (8) according to any of the preceding claims 1 through 3.

6. Method for manufacturing a windscreen wiper arm (8), particularly for automobiles, comprising a mounting head (18) on a drive shaft (19) and an arm member (20) pivotally connected to the mounting head (18) by means of a pivot pin (21), wherein the arm member (20) has a substantially U-shaped cross-section near said pivot pin (21) comprising two side walls (25, 26), wherein a part of the mounting head (18) extends between the side walls (25, 26) and beyond said pivot pin (21), and wherein a spring (22) is hooked with its first end on a pin (23) on the mounting head (18), **characterized in that** a lip (30) is cut in a base (29) and/or at least one side wall (25, 26) of the U-shaped cross-section of the arm member (20), wherein said lip (30) is subsequently bent inwardly away from said base (29)/side wall (25, 26) and wherein said spring (22)is finally hooked with its second end into a hole (31) provided in said lip (30).

## Patentansprüche

1. Scheibenwischerarm (8), insbesondere für Automobile, enthaltend einen Montagekopf (18) auf einer Antriebswelle (19) und ein Armelement (20), das schwenkbar mit dem Montagekopf (18) mit Hilfe eines Drehzapfens (21) verbunden ist, wobei das Armelement (8) einen im wesentlichen U-förmigen Querschnitt in der Nähe des Drehzapfens (21) hat, der zwei Seitenwände (25, 26) enthält, wobei sich ein Teil des Montagekopfes (18) zwischen den Seitenwänden (25, 26) und über den Drehzapfen (21) hinaus erstreckt, und wobei eine Feder (22) mit ihrem ersten Ende an einem Zapfen (23) am Montagekopf (18) und mit ihrem zweiten Ende am Armelement (20) eingehakt ist, **dadurch gekennzeichnet, dass** die Feder (22) mit ihrem zweiten Ende an einem Ansatz (30) eingehakt ist, der in eine Grundfläche (29) oder eine Seitenwand (25, 26), die den U-förmigen Querschnitt des Armelementes ausbilden, geschnitten ist, wobei dieser Ansatz (30) nach innen von der Grundfläche (29) oder der Seitenwand (25, 26) weggebogen ist.

2. Scheibenwischerarm (8) nach Anspruch 1, bei dem die Feder (22) mit ihrem zweiten Ende in ein Loch (31) gehakt ist, das im Ansatz (30) vorgesehen ist.

3. Scheibenwischerblatt (8), nach Anspruch 1 oder 2, bei dem das Armelement (20) aus einem Kunststoffmaterial besteht.

4. Scheibenwischervorrichtung (1), enthaltend einen Windschutzscheiben-Wischerarm (8) nach Anspruch 1, 2 oder 3.

5. Scheibenwischervorrichtung (1) nach Anspruch 4, enthaltend ein elastisches, längliches Trägerelement wie auch ein längliches Wischerblatt (2) aus einem flexiblen Material, das in Kontakt mit einer zu wischenden Windschutzscheibe angeordnet werden kann, wobei das Wischerblatt (2) gegenüberliegende längliche Rillen (3) auf seinen Längsseiten enthält, in diesen Rillen (3) beabstandete Längsstreifen (4) des Trägerelementes angeordnet sind, benachbarte Enden der Längsstreifen (4) mit einem jeweiligen Verbindungsstück (6) verbunden sind und die Scheibenwischervorrichtung (1) eine Verbindungsvorrichtung (7) für einen Windschutzscheibenwischerarm (8) gemäß einem der vorhergehenden Ansprüche enthält.

6. Verfahren zum Herstellen eines Windschutzscheibenwischerarmes (8), insbesondere für Automobile, enthaltend einen Montagekopf (18) auf einer Antriebswelle (19) und ein Armelement (20), das schwenkbar mit dem Montagekopf (18) mit Hilfe eines Drehzapfens (21) verbunden ist, wobei das Armelement (8) einen im wesentlichen U-förmigen Querschnitt in der Nähe des Drehzapfens (21) hat, der zwei Seitenwände (25, 26) enthält, wobei sich ein Teil des Montagekopfes (18) zwischen den Seitenwänden (25, 26) und über den Drehzapfen (21) hinaus erstreckt, und wobei eine Feder (22) mit ihrem ersten Ende an einem Zapfen (23) am Montagekopf (18) eingehakt ist, **dadurch gekennzeichnet, dass** ein Ansatz (30) in eine Grundfläche (29) und/oder wenigstens eine Seitenwand (25, 26), der U-förmigen Querschnittes des Armelementes (20) geschnitten wird, worauf der Ansatz (30) nach innen von der Grundfläche (29) / der Seitenwand (25, 26) weggebogen wird und die Feder (22) schließlich mit ihrem zweiten Ende in ein Loch (31) gehakt wird, das in dem Ansatz (30) ausgebildet ist.

## Revendications

1. Bras d'essuie-glace de pare-brise (8), en particulier pour des automobiles, comprenant une tête de montage (18) sur un arbre d'entraînement (19) et un élément de bras (20) relié à pivotement à la tête de montage (18) au moyen d'une tige de pivot (21), où l'élément de bras (8) possède une section transversale sensiblement en forme de U à proximité de ladite tige de pivot (21) comprenant deux parois latérales (25, 26), où une partie de la tête de montage (18) s'étend entre les parois latérales (25, 26) et au-delà de la tige de pivot (21), et où un ressort (22) est accroché à sa première extrémité sur une broche (23) sur la tête de montage (18) et à sa deuxième extrémité sur l'élément de bras (20), **caractérisé en ce que** ledit ressort (22) est accroché à sa deuxième extrémité sur une lèvre (30) découpée dans une base (29) ou une paroi latérale (25, 26) qui forme la section transversale en forme de U de l'élément de bras (20), où ladite lèvre (30) est courbée vers l'intérieur à distance de ladite base (29) ou paroi latérale (25, 26).

2. Bras d'essuie-glace de pare-brise (8) selon la revendication 1, où ledit ressort (22) est accroché à sa deuxième extrémité dans un trou (31) prévu dans ladite lèvre (30).

3. Bras d'essuie-glace de pare-brise (8) selon la revendication 1 ou 2, où l'élément de bras (20) est fait d'un matériau plastique.

4. Dispositif d'essuie-glace de pare-brise (1) comprenant un bras d'essuie-glace de pare-brise (8) selon la revendication 1, 2 ou 3.

5. Dispositif d'essuie-glace de pare-brise (1) selon la revendication 4, comprenant un élément de support élastique allongé, ainsi qu'un balai d'essuie-glace allongé (2) fait d'un matériau flexible, qui peut être placé en aboutement avec un pare-brise à essuyer, lequel balai d'essuie-glace (2) comprend des rainures longitudinales opposées (3) sur ses côtés longitudinaux, dans lesquelles rainures (3) sont disposées des bandes longitudinales espacées (4) de l'élément de support, les extrémités voisines (5) desdites bandes longitudinales (4) étant reliées entre elles par une pièce de raccord respectif (6), lequel dispositif d'essuie-glace de pare-brise (1) comprend un dispositif de raccord (7) pour le bras d'essuie-glace de pare-brise (8) selon l'une quelconque des revendications 1 à 3 précédentes.

6. Procédé de fabrication d'un bras d'essuie-glace de pare-brise (8), en particulier pour des automobiles, comprenant une tête de montage (18) sur un arbre d'entraînement (19) et un élément de bras (20) relié à pivotement à la tête de montage (18) au moyen d'une tige de pivot (21), où l'élément de bras (20) possède une section transversale sensiblement en forme de U à proximité de la tige de pivot (21) comprenant deux parois latérales (25, 26), où une partie de la tête de montage (18) s'étend entre les parois latérales (25, 26) et au-delà de ladite tige de pivot (21), et où un ressort (22) est accroché à sa première extrémité sur une broche (23) sur la tête de montage (18), **caractérisé en ce qu'**une lèvre (30) est découpée dans une base (29) et/ou au moins une paroi latérale (25, 26) de la section transversale en forme de U de l'élément de bras (20), où ladite lèvre (30) est ensuite courbée vers l'intérieur à distance de ladite base (29)/paroi latérale (25, 26) et où ledit ressort (22) est enfin accroché à sa deuxième extrémité dans un trou (31) prévu dans ladite lèvre (30).
